# FASCICULE DE BREVET EUROPEEN

(11) **EP 2 689 762 B1**
(45) Date de publication et mention de la délivrance du brevet: **05.11.2014**
(21) Numéro de dépôt: 13176230.4
(22) Date de dépôt: 12.07.2013
(51) Int. Cl.: A61G 5/10, B60G 3/20, A61G 1/04, A61G 1/02

(54) **Moyen de transport tout terrain pour personnes à motricité déficiente**
Gelände-Transportmittel für Menschen mit eingeschränkter Bewegungsfähigkeit
All-terrain transport means for mobility-impaired persons

(30) Priorité: 27.07.2012 FR 1257332
(43) Date de publication de la demande: 29.01.2014
(73) Titulaire: Ferriol-Matrat, 42100 Saint Etienne (FR)
(72) Inventeur: Ferriol, Pierre, 42170 Saint Just Saint Rambert (FR); Odin, Jean-Christophe, 42320 Farnay (FR)
(74) Mandataire: Cabinet Laurent & Charras

(56) Documents cités:
- EP-A1- 1 227 966
- EP-A2- 1 155 950
- WO-A1-2008/039196
- GB-A- 2 380 458
- JP-A- 1 229 787
- US-A1- 2008 164 085

## Description

### DOMAINE TECHNIQUE

La présente invention concerne un perfectionnement à un moyen de transport tout terrain de personne à motricité déficiente et plus particulièrement un essieu particulièrement destiné à un tel moyen de transport tout terrain de personne à motricité déficiente et/ou de matériel ou a tout autre moyen de transport tracté et/ou tiré.

### ART ANTERIEUR

Dans le domaine des moyens de transport de personnes à motricité déficiente, il est bien connu des dispositifs appelés communément "fauteuils roulants" permettant de les déplacer, voire de leur conférer une certaine autonomie, ces fauteuils pouvant être actionnés soit manuellement, soit en les munissant d'un moteur le plus souvent électrique. Par personne à motricité déficiente, on entend selon l'invention toute personne ne pouvant jouir normalement de ses membres inférieurs, à savoir dépourvue de tonicité musculaire, ou ne pouvant contrôler celle-ci, ou paraplégique ou hémiplégique.

Néanmoins, de tels fauteuils sont totalement inadaptés pour toute utilisation en dehors de chemins goudronnés, généralement parfaitement plats, c'est à dire ne présentant aucune aspérité, et disposant d'une largeur suffisante pour permettre leur progression. En effet, ces fauteuils ne comportent pas de moyen d'amortissement et une garde au sol trop basse, due à la taille trop réduite des roues avant notamment.

Afin de remédier à ces inconvénients, on a déjà imaginé un dispositif susceptible de permettre le déplacement de personnes dites à motricité déficiente dans les bois, dans la moyenne montagne, etc..., et plus généralement hors des voies goudronnées.

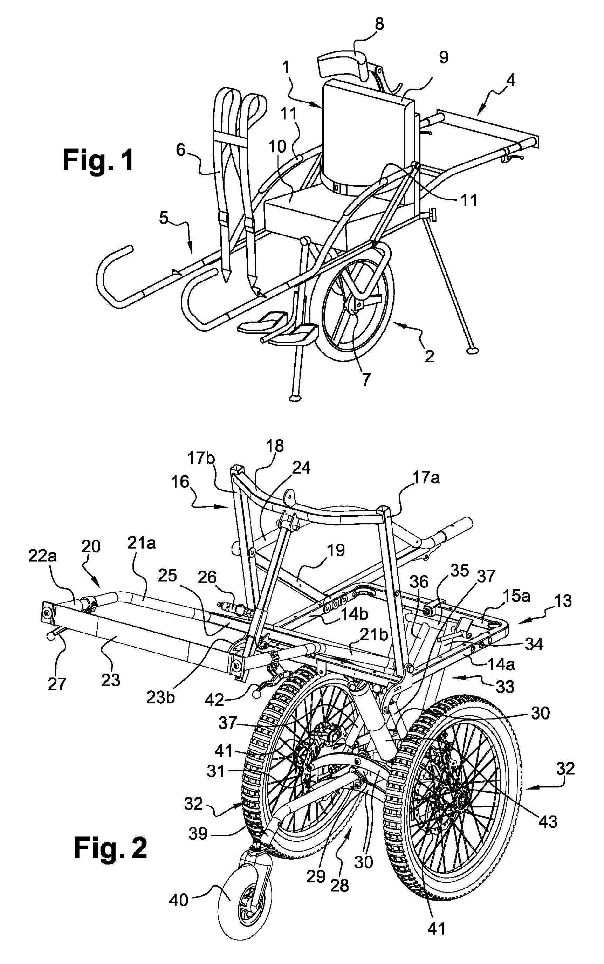

C'est le cas notamment de la demande de brevet français FR 2 682 871 qui décrit un moyen de transport tout terrain de personne à motricité déficiente communément appelé Joelette® (marque déposée). Ce moyen de transport tout terrain pour personnes à motricité déficiente, en référence à la figure 1, comprend un fauteuil (1) proprement dit destiné à recevoir ladite personne, une seule roue (2), située sous le fauteuil (1) parallèlement à celui-ci et selon sa ligne médiane de symétrie, et venant se fixer au niveau d'un châssis (3) sur lequel est fixé le fauteuil (1), la force résultante s'exerçant au niveau du centre de gravité lors de l'utilisation du fauteuil (1) passant par l'axe de rotation de la roue (2), et un brancard postérieur (4), solidaire du châssis (3), orientable en hauteur, et destiné à permettre la progression du fauteuil (1) par un individu valide, ledit châssis (3) comportant en outre trois béquilles escamotables, respectivement une antérieure et deux postérieures. Ledit fauteuil (1) est également muni d'un brancard antérieur (5), muni d'un harnais de traction (6), destinée à permettre à un autre individu d'assurer la progression du fauteuil (1), afin d'aider le "pousseur arrière", et en outre de porter l'ensemble le cas échéant. Par ailleurs, la roue (2) est munie d'un frein (7), notamment d'un frein à tambour actionnable à partir du brancard postérieur (4). Avantageusement, le fauteuil (1) comporte un appui-tête réglable (8), le dossier (9) étant inclinable par les bras latéraux de blocage inclinés à 45°. En outre, le fauteuil (1) proprement dit comporte des coussins anti-escarres (10) ainsi que des accoudoirs (11). Il comprend également un repose pied (12) réglable en hauteur et en profondeur.

Ainsi, ce moyen de transport est muni d'une seule roue, diminuant de manière fondamentale l'encombrement au sol, le poids résultant du fauteuil roulant, et de fait l'effort à produire en terrain irrégulier. La progression est rendue possible par deux individus valides tenant les brancards postérieur et respectivement antérieur, assurant, outre la progression dans le sens de la marche, l'équilibre du fauteuil. Celui-ci étant d'un poids relativement léger, et l'axe de la roue étant positionné le long de la ligne médiane dudit fauteuil, les efforts à exercer pour maintenir celui-ci en équilibre sont relativement réduits.

Bien que ce type de dispositif ait permis à des personnes déficientes de pouvoir faire des randonnées, il présente néanmoins l'inconvénient d'être difficile à maintenir en équilibre, nécessitant des efforts importants pour les individus valides tenant les brancards postérieur et respectivement antérieur, et difficile à manoeuvrer sur des chemins de randonnée en faible dévers et/ou comportant des bosses et/ou des trous, risquant ainsi une chute de ladite personne déficiente.

### EXPOSE DE L'INVENTION

L'un des buts de l'invention est donc de remédier à cet inconvénient en proposant un essieu de conception simple et peu onéreuse, notamment adapté à un fauteuil du type tout terrain, susceptible de permettre la progression d'une personne à motricité déficiente et/ou de matériel dans les sous bois, la moyenne montagne, et les environnements naturels équivalents et sur des chemins en dévers en toute sécurité pour la personne déficiente et les accompagnateurs.

A cet effet et conformément à l'invention, il est proposé un essieu pour moyen de transport tracté et/ou poussé remarquable en ce qu'il comprend au moins un longeron central aux extrémités avant et arrière duquel sont articulés respectivement deux paires de bras s'étendant parallèlement, deux fusées de roue articulées aux extrémités libres des paires de bras et portant respectivement un moyeu d'une roue, un bras oscillant solidaire de l'une des extrémité du longeron central, ledit bras oscillant étant apte à être articulé à un châssis d'un moyen de transport suivant un axe perpendiculaire à l'axe e rotation des bras, et deux ressorts s'étendant symétriquement de part et d'autre du bras oscillant, les extrémités libres de chaque ressort étant articulées respectivement au bras oscillant et à une fusée de roue.

On comprend bien que l'essieu suivant l'invention constitue un essieu à parallélogramme déformable permettant de maintenir le châssis du moyen de transport, plus particulièrement le moyen de transport tout terrain pour personne à motricité déficiente, sous lequel il est monté suivant un plan horizontal malgré le dévers et/ou les bosses et/ou les trous procurant ainsi un parfait confort et une parfaite sécurité pour ladite personne et une facilité de conduite pour les personnes manoeuvrant ledit moyen de transport.

De préférence, les ressorts consistent en des vérins à gaz.

De préférence, le longeron central est constitué de trois tubes s'étendant parallèlement dans un plan vertical, au moins l'un des tubes étant apte à recevoir un bras portant à son extrémité libre une roue de stabilisation dont le diamètre est inférieur au diamètre des roues de l'essieu. Cette roue de stabilisation permet d'éviter le basculement du châssis du moyen de transport à l'arrêt et de maintenir sensiblement horizontal ledit châssis sans que le « propulseur » positionné au niveau de du brancard antérieur n'ait à porter le poids de la personne à motricité déficiente assis dans le fauteuil.

Par ailleurs, chaque moyeu des roues porte un frein à disque.

De plus, chaque roue est inclinée vers le plan sagittal de l'essieu de manière à former un angle α avec ledit plan sagittal lorsque les roues sont sur une surface horizontale, ledit angle α étant de préférence compris entre 2 et 5°.

De manière avantageuse, ledit essieu comporte un amortisseur dont une extrémité est articulée au longeron central et dont l'autre extrémité est apte à être articulée au châssis d'un moyen de transport.

Par ailleurs, les bras présentent une forme curviligne dont la concavité est orientée vers le bas, lesdits bras étant articulé au longeron central dans leur partie médiane. Une telle forme des bras permet d'augmenter la garde au sol du moyen de transport tout terrain suivant l'invention.

Un autre objet de l'invention concerne un moyen de transport tout terrain pour personne à motricité déficiente, comprenant un châssis sur lequel est solidarisé un fauteuil destiné à recevoir ladite personne, un brancard postérieur solidaire du châssis, et destiné à permettre la progression du fauteuil par un individu valide, un brancard antérieur muni d'un harnaisde traction destinée à permettre à un autre individu d'assurer de manière complémentaire sa progression, et un essieu suivant l'invention solidaire du châssis de telle manière que ledit essieu s'étende sous ledit châssis.

De manière avantageuse, le fauteuil comporte des coussins anti-escarre et un dossier articulé au châssis, ledit dossier étant inclinable au moyen de bras latéraux de blocage.

### DESCRIPTION SOMMAIRE DES FIGURES

D'autres avantages et caractéristiques ressortiront mieux de la description qui va suivre d'une unique variante d'exécution, donnée à titre d'exemple non limitatif, de l'essieu pour moyen de transport tracté et/ou poussé conforme à l'invention, en référence aux dessins annexés sur lesquels :
- la figure 1 est une vue en perspective d'un moyen de transport tout terrain pour personne à motricité déficiente de l'art antérieur commercialisé sous la dénomination Joëlette®,
- la figure 2 est une vue en perspective d'un moyen de transport tout terrain pour personne à motricité déficiente suivant l'invention,
- la figure 3 est vue de côté du moyen de transport tout terrain pour personne à motricité déficiente suivant l'invention,
- la figure 4 est une vue arrière du moyen de transport tout terrain pour personne à motricité déficiente suivant l'invention,
- la figure 5 est une vue en perspective éclatée de l'essieu du moyen de transport tout terrain pour personne à motricité déficiente suivant l'invention,
- la figure 6 est une vue arrière de l'essieu du moyen de transport tout terrain pour personne à motricité déficiente suivant l'invention en position de compensation d'un dévers et/ou d'une bosse et/ou d'un trous.

### DESCRIPTION DETAILLEE DE L'INVENTION

Par souci de clarté, dans la suite de la description, les mêmes éléments ont été désignés par les mêmes références aux différentes figures. De plus, les diverses vues ne sont pas nécessairement tracées à l'échelle.

En référence aux figures 2 à 5, le moyen de transport tout terrain pour personne à motricité déficiente comporte un châssis (13) comprenant un cadre horizontal parallélépipédique constitué de deux longerons (14a,14b) et de deux traverses (15a,15b) soudés deux à deux. Ces longerons (14a,14b) et ces traverses (15a,15b) sont réalisés dans un élément métallique résistant et léger, tel que par exemple de l'acier.

Toutefois, il est bien évident que lesdits longerons (14a,14b) et lesdites traverses (15a,15b) pourront être réalisés en tout autre matériau résistant et léger, comme par exemple en fibres de carbone ou en fibres de verre.

Le châssis (13) est apte à recevoir un fauteuil, non représenté sur les figures, dont l'assise prend appui sur le cadre du châssis (13). Ledit châssis (13) comporte également un dossier (16) constitué de deux montants (17a,17b) articulés au cadre et dont les extrémités libres sont reliés par une traverse (18), ledit dossier (16) étant inclinable au moyen de bras latéraux (19) de blocage.

Ainsi, le fauteuil comprend un dossier (16) dont l'inclinaison est susceptible de s'adapter au patient, au moyen des bras de blocage latéraux (19). De préférence, le fauteuil comportera un appui-tête, également réglable en profondeur et en hauteur par tout moyen approprié, et un repose pied, réglable en hauteur et en profondeur, destiné à recevoir les pieds de la personne transportée, éventuellement muni d'un dispositif de maintien des jambes de ladite personne, afin, lorsque celle-ci ne dispose pas d'une tonicité musculaire suffisante de lui maintenir les jambes sans risquer le déport de celle-ci hors du repose pied. De plus, le fauteuil comportera de préférence des coussins anti-escarre.

Par ailleurs, le châssis (13) comporte un brancard arrière (20), constitué de deux bras (21a,21b) articulés au châssis (13) dont les extrémités libres sont avantageusement munies d'une poignée (22a,22b) destinée à favoriser la préhension de l'ensemble, et une sangle transversale (23), permettant un effort de poussée à l'aide du bassin par la personne "propulseur". Ce brancard arrière (20) est destiné à être tenu par une personne valide, à l'instar d'une brouette, dans une position d'équilibre de l'ensemble, afin d'assurer la progression dans le sens de la marche du moyen de transport.

De manière avantageuse, ledit brancard arrière (20) est réglable en hauteur, par l'intermédiaire d'une coulisse (24), fixé d'une part au centre de la traverse supérieure (18) du dossier (16) du châssis (13), et à son autre extrémité à une entretoise (25) reliant les deux bras (21a,21b) dudit brancard arrière (20). Ladite coulisse (24) comporte des moyens d'indexation (26) consistant par exemple dans un doigt en appui sur un ressort, ledit doigt étant apte à coopérer avec des trous pratiqués le long de la coulisse (24), et pilotés par un levier de commande (27) positionné au niveau de l'une des poignées (22a) du brancard arrière (20). De cette manière, l'individu « propulseur » peut adapter la hauteur du brancard arrière en fonction de la conformation du terrain sans nécessiter l'arrêt du moyen de transport suivant l'invention.

Il va de soi que la coulisse (24) pourra être substituée par tout autre moyen équivalent bien connu de l'homme du métier sans pour autant sortir du cadre de l'invention.

De plus, le châssis (13) pourra également comporter un brancard antérieur, non représenté sur les figures, comprenant avantageusement un harnais ou une sangle de traction. Le "tracteur" pourra passer autour des épaules la sangle afin de favoriser la progression et ainsi aider la personne assurant la propulsion entre les brancards.

Ledit châssis (13) repose sur un essieu (28) comprenant un longeron central (29) aux extrémités avant et arrière duquel sont articulés respectivement deux paires de bras (30) s'étendant parallèlement, deux fusées de roue (31) articulées aux extrémités libres des paires de bras (30) et portant respectivement un moyeu d'une roue (32). Chaque bras (30) présente une forme curviligne dont la concavité est orientée vers le bas, lesdits bras (30) étant articulés au longeron central (29) dans leur partie médiane. Les deux roues (32) sont du type roue de vélo tout terrain ou de cyclomoteur, à savoir sensiblement de même diamètre, et munie d'un pneu de sensiblement même largeur et ce, afin de favoriser le franchissement des obstacles, et d'augmenter au maximum la garde au sol, le confort et donc le rôle amortisseur de la roue.

Ledit essieu (28) comporte également un bras oscillant (33) solidaire de l'une des extrémités du longeron central (29), de son extrémité avant dans cet exemple particulier de réalisation, l'extrémité libre dudit bras oscillant (33) étant articulée à la traverse avant (15a) du cadre formant le châssis (13) suivant un axe perpendiculaire à l'axe de rotation des bras (30). Ledit bras oscillant (33) est constitué d'un tube cintré en forme de U (34) dont les extrémités sont reliées par une traverse (35) et d'un tube central (36) s'étendant depuis l'extrémité arrière du longeron central (29) jusqu'à la partie médiane de la traverse (35).

L'essieu (28) comporte également deux ressorts à gaz (37) s'étendant symétriquement de part et d'autre du bras oscillant (33), les extrémités libres de chaque ressort à gaz (37) étant articulées respectivement au bras oscillant (33) et à une fusée de roue (31). Dans cet exemple particulier de réalisation, chaque ressort à gaz (37) est articulé dans la partie médiane du tube central (36) du bras oscillant (33) et à une fusée de roue (31). Ces ressorts à gaz (37) permettent le retour des roues (32) dans leur position d'équilibre horizontal, après avoir rencontré un obstacle et/ou un trou et/ou un dévers.

Il est bien évident que les ressorts à gaz (37) pourront être substitués par tout autre moyen bien connu de l'homme du métier tel que des ressorts hélicoïdaux ou similaires, des ressorts guidés, etc... sans sortir du cadre de l'invention.

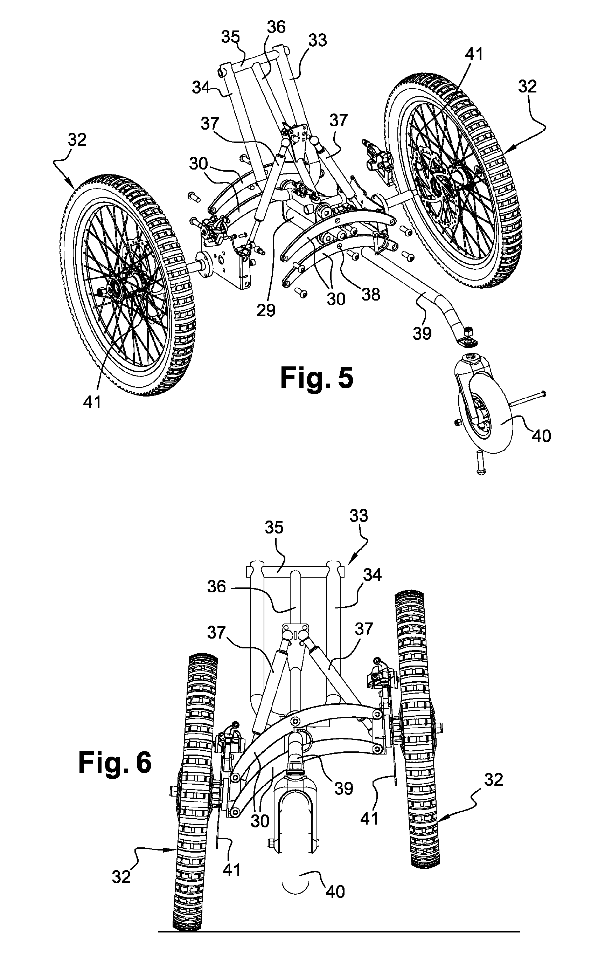

On comprend bien que, en référence à la figure 6, l'essieu (28) suivant l'invention constitue un essieu (28) à parallélogramme déformable permettant de maintenir le châssis (13) du moyen de transport, plus particulièrement le moyen de transport tout terrain pour personne à motricité déficiente, sous lequel il est monté suivant un plan horizontal malgré le dévers et/ou les bosses et/ou les trous procurant ainsi un parfait confort et une parfaite sécurité pour ladite personne et une facilité de conduite pour les personnes manoeuvrant ledit moyen de transport.

De préférence, le longeron central (29) est constitué de trois tubes s'étendant parallèlement dans un plan vertical, le plan sagittal du moyen de transport tout terrain suivant l'invention, au moins l'un des tubes portant une tige (38) faisant saillie à l'arrière du longeron central (29) et étant apte à recevoir un bras (39) portant à son extrémité libre une roue de stabilisation (40) dont le diamètre est inférieur au diamètre des roues (32) de l'essieu. Cette roue de stabilisation (40) est montée folle et permet de maintenir sensiblement horizontal ledit châssis (13) à l'arrêt sans efforts. Le bras (39) portant ladite roue de stabilisation (40) est avantageusement amovible. De cette manière, le bras (39) portant la roue de stabilisation (40) est mis en place lorsque le moyen de transport est à l'arrêt puis il est soit maintenu en position lors de la randonnée soit retiré en faisant pivoter le bras (39) autour de la tige (38) sur laquelle le bras est emboîté afin de retourner la roue de stabilisation (40).

Par ailleurs, chaque moyeu des roues (32) porte un frein à disque (41) dont la poignée d'actionnement (42) est solidaire de la poignée (22b) du brancard arrière (20).

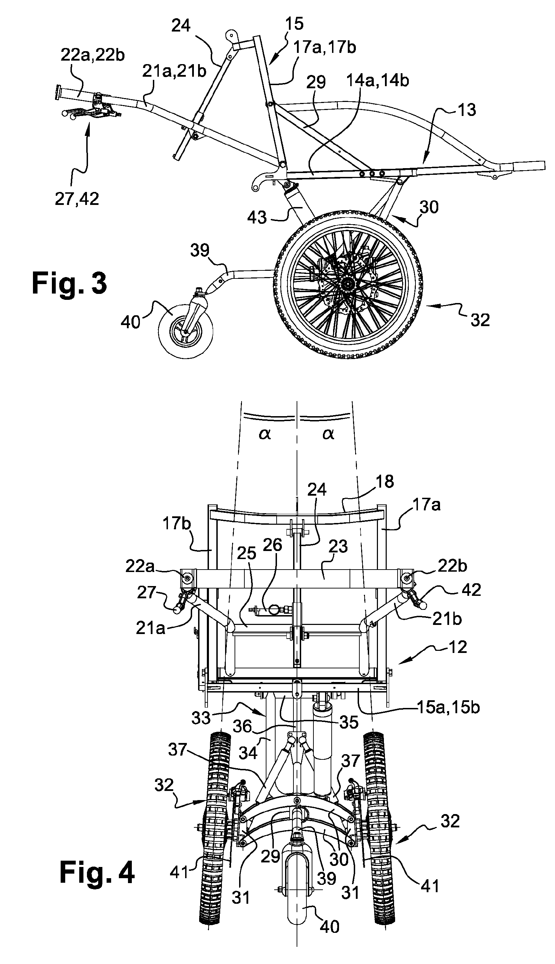

De plus, en référence à la figure 4, chaque roue (32) est inclinée vers le plan sagittal de l'essieu (28) de manière à former un angle α avec ledit plan sagittal lorsque les roues (32) sont sur une surface horizontale, ledit angle α étant de préférence compris entre 2 et 5°. Dans cet exemple particulier de réalisation, l'angle α est de 3,5°. Une telle inclinaison des roues (32) dite « carrossage » procure une plus grande stabilité de l'essieu (28) et, in fine, du fauteuil dans lequel prend position la personne à motricité déficiente.

De manière avantageuse, ledit essieu (28) comporte un amortisseur (43) dont une extrémité est articulée au longeron central (29) et dont l'autre extrémité est articulée à la traverse arrière (15b) du cadre formant le châssis (13) du moyen de transport suivant l'invention. Cet amortisseur (43) permet d'optimiser le confort de la personne transportée.

Accessoirement, les différents éléments entrant dans la composition de ce moyen de transport sont soit repliables, soit démontables, afin de pouvoir tenir dans un coffre de voiture de petites dimensions, inhérent ainsi à l'encombrement particulièrement réduit qu'il offre alors.

De la sorte un tel moyen de transport muni d'un essieu à parallélogramme déformable suivant l'invention permet le franchissement de sentiers y compris en dévers. Seul l'équilibre est à maintenir au moyen des brancards arrière (20) et avant. De la sorte, la promenade en sous bois et la randonnée en moyenne montagne sont accessibles aux personnes à motricité déficiente.

Il va de soi que l'essieu (28) suivant l'invention pourra être adapté à tout autre moyen de transport tracté et/ou poussé pour une personne valide ou à motricité déficiente et/ou pour du matériel tel qu'une poussette, une brouette ou une remorque par exemple sans sortir du cadre de l'invention.

Enfin, il est bien évident que les exemples que l'on vient de donner ne sont que des illustrations particulières, en aucun cas limitatives quant aux domaines d'application de l'invention.

## Revendications

1. Essieu (28) pour moyen de transport tracté et/ou poussé **caractérisé en ce qu'**il comprend au moins un longeron central (29) aux extrémités avant et arrière duquel sont articulés respectivement deux paires de bras (30) s'étendant parallèlement, deux fusées de roue (31) articulées aux extrémités libres des paires de bras (30) et portant respectivement un moyeu d'une roue (32), un bras oscillant (33) solidaire de l'une des extrémité du longeron central (29), ledit bras oscillant (33) étant apte à être articulé à un châssis (13) d'un moyen de transport suivant un axe perpendiculaire à l'axe de rotation des bras (30), et deux ressorts (37) s'étendant symétriquement de part et d'autre du bras oscillant (33), les extrémités libres de chaque ressort (37) étant articulées respectivement au bras oscillant (33) et à une fusée de roue (31).

2. Essieu suivant la revendication précédente ***caractérisé* en ce que** les ressorts (37) consistent en des vérins à gaz.

3. Essieu suivant l'une quelconque des revendications 1 ou 2 ***caractérisé* en ce que** le longeron central (29) est constitué de trois tubes s'étendant parallèlement dans un plan vertical, au moins l'un des tubes étant apte à recevoir un bras (39) portant à son extrémité libre une roue de stabilisation (40) dont le diamètre est inférieur au diamètre des roues (32).

4. Essieu suivant l'une quelconque des revendications 1 à 3 ***caractérisé* en ce que** chaque moyeu des roues (32) porte un frein à disque (41).

5. Essieu suivant l'une quelconque des revendications 1 à 4 ***caractérisé* en ce que** chaque roue (32) est inclinée vers le plan sagittal de l'essieu de manière à former un angle a avec ledit plan sagittal lorsque les roues (32) sont sur une surface horizontale.

6. Essieu suivant la revendication 5 ***caractérisé* en ce que** l'angle α est compris entre 2 et 5°.

7. Essieu suivant l'une quelconque des revendications 1 à 6 ***caractérisé* en ce que** ledit essieu (28) comporte un amortisseur (43) dont une extrémité est articulée au longeron central (29) et dont l'autre extrémité est apte à être articulée au châssis (13) d'un moyen de transport.

8. Essieu suivant l'une quelconque des revendications à 7 ***caractérisé* en ce que** les bras (30) présentent une forme curviligne dont la concavité est orientée vers le bas, lesdits bras (30) étant articulé au longeron central (29) dans leur partie médiane.

9. Moyen de transport tout terrain pour personne à motricité déficiente, comprenant un châssis (13) sur lequel est solidarisé un fauteuil destiné à recevoir ladite personne, un brancard postérieur (20) solidaire du châssis (13), et destiné à permettre la progression du fauteuil par un individu valide, un brancard antérieur muni d'un harnais de traction destinée à permettre à un autre individu d'assurer de manière complémentaire sa progression, et un essieu (28) suivant l'une quelconque des revendications 1 à 7 solidaire du châssis (13) de telle manière que ledit essieu (28) s'étende sous ledit châssis (13).

10. Moyen de transport suivant la revendication 9 ***caractérisé* en ce que** fauteuil comporte un dossier (16) articulé au châssis (13), ledit dossier (16) étant inclinable au moyen de bras latéraux de blocage (19).

11. Moyen de transport suivant l'une quelconque des revendications 9 ou 10 ***caractérisé* en ce que** le fauteuil comporte des coussins anti-escarre.

## Patentansprüche

1. Achse (28) für gezogenes und / der geschobener Transportmittel, **dadurch gekennzeichnet, dass** es wenigstens einen zentralen Längsträger (29) am vorderen und hinteren Ende, an dem jeweils zwei Armpaare (30) artikuliert sind, die sich parallel erstrecken, zwei an den freien Enden der Armpaare (30) artikulierte und jeweils eine Nabe eines Rades (32) tragende Radspindeln (31), einen an einem der Enden des zentralen Längsträgers (29) fest befestigten schwingenden Arm (33), wobei der genannte schwingende Arm (33) geeignet ist, an einem Gestell (13) eines Transportmittels gemäß einer zur Rotationsachse der Arme (30) lotrechten Achse artikuliert zu sein, und zwei sich symmetrisch auf jeder Seite des schwingenden Arms (33) erstreckende Feldern (37) umfasst, wobei die freien Enden jeder Feder (37) jeweils am schwingenden Arm (33) und an einer Radspindel (31) artikuliert sind.

2. Achse gemäß dem voranstehenden Anspruch, **dadurch gekennzeichnet, dass** die Federn (37) aus Gasfedern bestehen.

3. Achse gemäß Anspruch 1 oder 2, **dadurch gekennzeichnet, dass** der zentrale Längsträger (29) aus drei Röhren besteht, die sich parallel zu einer vertikalen Ebene erstrecken, wobei wenigstens eines der Röhren geeignet ist, einen Arm (39) aufzunehmen, der an seinem freien Ende ein Stützrad (40) trägt, dessen Durchmesser kleiner ist als der Durchmesser der Räder (32).

4. Achse gemäß Anspruch 1 bis 3, **dadurch gekennzeichnet, dass** jede Nabe der Räder (32) eine Scheibenbremse (41) trägt.

5. Achse gemäß Anspruch 1 bis 4, **dadurch gekennzeichnet, dass** jedes Rad (32) zur sagittalen Ebene der Achse derart geneigt ist, dass ein Winkel α mit der genannten sagittalen Ebene gebildet wird, wenn die Räder (32) sich auf einer horizontalen Fläche befinden.

6. Achse gemäß Anspruch 5, **dadurch gekennzeichnet, dass** der Winkel α zwischen 2 rund 5° inbegriffen ist.

7. Achse gemäß Anspruch 1 bis 6, **dadurch gekennzeichnet**, die genannte Achse (28) einen Stoßdämpfer (43) umfasst, von dem ein Ende am zentralen Längsträger (29) artikuliert ist und dessen anderes Ende geeignet ist, am Gestell (13) Transportmittels artikuliert zu sein.

8. Achse gemäß Anspruch 1 bis 7, **dadurch gekennzeichnet, dass** die Arme (30) eine krummlinige Form aufweisen, deren Konkavität nach unten ausgerichtet ist, wobei die genannten Arme (30) in ihrem mittleren Teil am zentralen Längsträger (29) artikuliert sind.

9. Geländegängiges Transportmittel für Personen mit eingeschränkter Beweglichkeit, umfassend ein Gestell (13), auf dem ein Stuhl fest befestigt ist, der zur Aufnahme der genannten Person bestimmt ist, eine hintere Gabeldeichsel (20), die fest mit dem Gestell (13) befestigt und dazu bestimmt ist, das Verfahren des Stuhls durch eine gesunde Person zu erlauben, eine vordere Gabeldeichsel, die mit einem Zuggeschirr versehen ist, das dazu bestimmt ist, es einer anderen Person zu erlauben, sein Verfahren auf komplementäre Weise zu gewährleisten, und eine Achse (28) gemäß Anspruch 1 bis 7, die derart fest mit dem Gestell (13) befestig ist, dass sich die genannte Achse (28) unter dem genannten Gestell (13) erstreckt.

10. Transportmittel gemäß Anspruch 9, **dadurch gekennzeichnet, dass** dieser Stuhl eine am Gestell (13) artikulierte Rückenlehne (16) umfasst, wobei die genannte Rückenlehne (16) mittels lateralen Feststellarmen (19) neigbar ist.

11. Transportmittel gemäß Anspruch 9 oder 10, **dadurch gekennzeichnet, dass** der Stuhl Anti-Dekubituskissen umfasst.

## Claims

1. Axle (28) for a towed and/or propelled means of transport **characterized by** the fact that it incorporates at least: central long beam (29) at the front and rear ends, on which two pairs of arms (30) are respectively articulated and extent in parallel; two stub axles (31) articulated at the free ends of the pairs of arms (30) and respectively carrying a hub of a wheel (32), an oscillating arm (33) integral with one of the ends of the central long beam (29), the said oscillating arm (33) being able to be articulated on a chassis {13} of a means of transport [2], and two springs (37) being articulated respectively on the oscillating arm (33) and one stub axle (31).

2. Axle in accordance with the preceding claim, **characterized by** the fact that the springs (3 7) consist of gas-driven jacks.

3. Axle in accordance with either or claims 1 or 2, **characterized by** the fact that the central long beam (29) is composed of three tubes extending in parallel in a vertical plane, with at least one of the tubes being able to accommodate an arm (39) bearing, at its free end, a stabilizer wheel (40) of which the diameter is less than the diameter of the wheels (32).

4. Axle in accordance with any of claims 1 to 3, **characterized by** the fact that each stub axle (32) carries a disc brake (41).

5. Axle in accordance with any of claims 1 to 4, **characterized by** the fact that each wheel (32) is inclined towards the saggital plane of the axle, in such a manner as to form an angle *a* with the said saggital plane when the wheels (32) are on a horizontal surface.

6. Axle in accordance with claim 5, **characterized by** the fact that the angle *a* is between 2 and 5 degrees.

7. Axle in accordance with any of claims 1 to 6, **characterized by** the fact that the said axle (28) incorporates a damper (43) of which one end is articulated on the central long beam (29), and of which the other end can be articulated on the chassis (13) of a means of transport.

8. Axle in accordance with any of claims 1 to 7, **characterized by** the fact that the arms (30) have a curved form of which the concavity is oriented downwards, the said arms (30) being articulated on the central long beam (29) in their central part.

9. All-terrain means of transport for people being challenged from the motricity viewpoint, incorporating a chassis (13) integrally connected to a wheel chair designed to accommodate the said person, a rearwardly-positioned stretcher (20) integral with the chassis (13), and being designed to enable the propulsion of the wheelchair by an non-handicapped person, with a forwardly-positioned stretcher fitted with a traction hardness designed to enable another individual to provide additional assistance with the propulsion, and an axle (28) in accordance with any of claims 1 to 7, integral with the chassis (13) in such a manner that the said axle (28) extends under the said chassis (13).

10. Means of transport in accordance with claim 9, **characterized by** the fact that the wheelchair has a backrest (16) articulated on the chassis (13), with the said backrest (16) being inclinable by means of lateral locking arms (19).

11. Means of transport in accordance with any of claims 9 or 10, **characterized by** the fact that the stretcher incorporates bed-sore-prevention cushions.
